# EUROPEAN PATENT APPLICATION

(11) **EP 2 733 334 A1**
(43) Date of publication of application: **21.05.2014**
(21) Application number: 11869446.2
(22) Date of filing: 13.07.2011
(51) Int. Cl.: F02D 19/08, F02D 45/00

(54) **CONTROL DEVICE FOR INTERNAL COMBUSTION ENGINE**

(71) Applicant: Toyota Jidosha Kabushiki Kaisha, Toyota-shi, Aichi 471-8571 (JP)
(72) Inventor: SAKUMA, Tetsuya, Toyota-shi Aichi 471-8571 (JP)
(74) Representative: Winter, Brandl, Fürniss, Hübner, Röss, Kaiser, Polte - Partnerschaft
(86) International application number: PCT/JP2011/065976
(87) International publication number: WO 2013/008322

(57) **Abstract**

An ECU 1A is provided in an internal combustion engine 50 which uses multiple gaseous fuels as fuel and which is provided with a regulator 60A capable of adjusting pressure of the fuel to be injected in a fuel supply path FR. The ECU 1A performs combustion control of the internal combustion engine 50 on the basis of the amount of heat variation of the fuel when the pressure of the fuel is adjusted by the regulator 60A. The ECU 1A estimates a mixture ratio of the fuel to be used on the basis of the amount of heat variation of the fuel in adjusting the pressure thereof, and performs the combustion control of the internal combustion engine 50 on the basis of the estimated mixture ratio of the fuel to be used. Therefore, the combustion control of the internal combustion engine 50 is performed on the basis of the amount of heat variation of the fuel in adjusting the pressure thereof.

## Description

### TECHNICAL FIELD

The present invention relates to a control device for an internal combustion engine.

### BACKGROUND ART

There is known an internal combustion engine using multiple gaseous fuels as fuel. Patent Document 1 discloses a bi-fuel engine using the mixed fuel of liquefied petroleum gas and dimethylether as fuel, and discloses a method for estimating a mixture ratio of the mixed fuel. In addition, Patent Document 2 discloses a technique which may be related to the present invention. This technique is a control device for an internal combustion engine that determines whether the fuel is liquid or gaseous in using the liquid fuel and the gaseous fuel.

### PRIOR ART DOCUMENTS

### PATENT DOCUMENTS

Patent Document 1: Japanese Patent Application Publication No. 2005-61401
Patent Document 2: Japanese Patent Application Publication No. 2010-196667

### SUMMARY OF THE INVENTION

### PROBLEM TO BE SOLVED BY THE INVENTION

As for the internal combustion engine using multiple gaseous fuels as fuel, it is assumed that a mixture ratio of the fuel to be used changes whenever the fuel is supplied. However, the mixture ratio of the fuel to be used has to be grasped in order to perform appropriate combustion in the internal combustion engine. As for grasping the mixture ratio of the fuel to be used, it is desired to suppress an increase in cost, for example, caused by using a detection device that tends to be expensive due to the special device. Further, it is desired to reduce the whole size of the configuration required for grasping the mixture ratio of the fuel to be used.

The present invention takes the above problem into consideration and aims at providing a control device for an internal combustion engine using multiple gaseous fuels as fuel, thereby preferably achieving appropriate combustion corresponding to a mixture ratio of the fuel to be used.

### MEANS FOR SOLVING THE PROBLEM

The present invention is a control device for an internal combustion engine which uses multiple gaseous fuels as fuel and which is provided with a pressure adjustment portion capable of adjusting pressure of the fuel to be injected in a fuel supply path, the control device including a control portion that performs combustion control of the international combustion engine, on a basis of an amount of heat variation of the fuel when the pressure of the fuel is adjusted by the pressure adjustment portion.

The present invention may further include an estimate portion that estimates a mixture ratio of the fuel to be used, on a basis of the amount of heat variation of the fuel when the pressure of the fuel is adjusted by the pressure adjustment portion, wherein the control portion may perform the combustion control of the international combustion engine on a basis of the mixture ratio, estimated by the estimate portion, of the fuel to be used, and the combustion control may be performed on a basis of the amount of heat variation of the fuel when the pressure of the fuel is adjusted by the pressure adjustment portion.

### EFFECTS OF THE INVENTION

The present invention is capable of providing a control device for an internal combustion engine using multiple gaseous fuels as fuel, thereby preferably achieving appropriate combustion corresponding to a mixture ratio of the fuel to be used.

### BRIEF DESCRIPTION OF THE DRAWINGS

FIG. 1 is a schematically structural view of a structural outline of an internal combustion engine and related configurations;
FIG. 2 is a view of a main portion of a fuel supply path in a first embodiment;
FIG. 3 is a schematic diagram of an ECU;
FIG. 4 is a view of a relationship between an amount of transferred heat and a mixture ratio;
FIG. 5 is a flowchart of a first control operation;
FIG. 6 is a view of a main portion of a fuel supply path in a second embodiment; and
FIG. 7 is a flowchart of a second control operation.

### EMBODIMENTS FOR CARRYING OUT THE INVENTION

Embodiments of the invention are now described by referring to the drawings.

### Embodiment 1

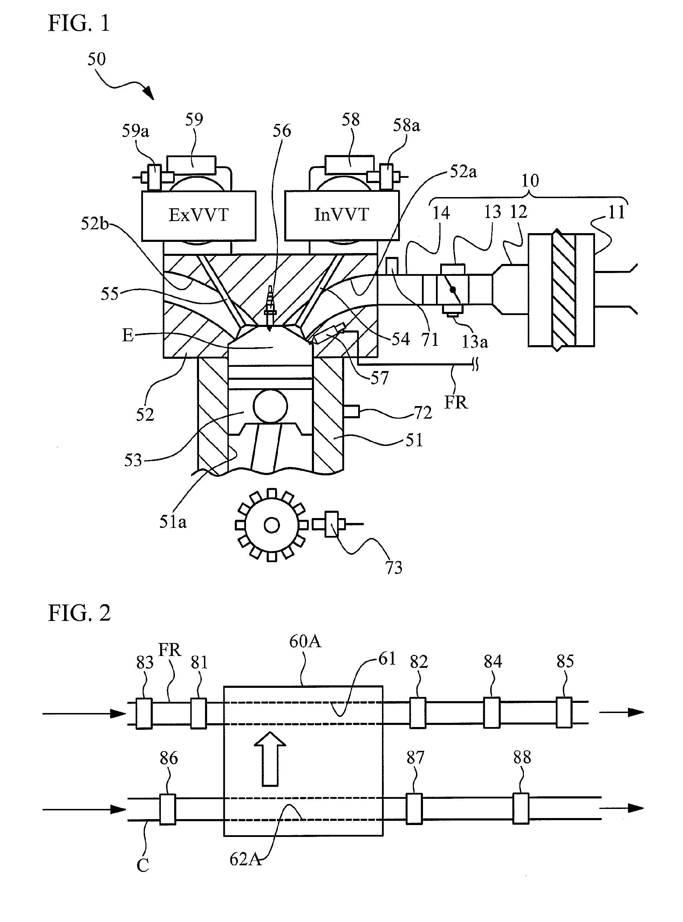

FIG. 1 is a schematically structural view of an internal combustion engine 50 and related configurations. An intake system 10 includes an air cleaner 11, an air flow meter 12, an electronically controlled throttle 13, and an intake manifold 14. The air cleaner 11 filters the intake air. The air flow meter 12 measures the amount of the intake air GA of the internal combustion engine 50. The electronically controlled throttle 13 adjusts the amount of the intake air GA. The electronically controlled throttle 13 is provided with a throttle position sensor 13a. The intake manifold 14 distributes the intake air into each cylinder of the internal combustion engine 50. The intake manifold 14 is provided with an intake air temperature sensor 71.

The internal combustion engine 50 is equipped with a cylinder block 51, a cylinder head 52, a piston 53, an intake valve 54, an exhaust valve 55, a spark plug 56, a fuel injection valve 57, an intake-side VVT (InVVT) 58, and an exhaust-side VVT (ExVVT) 59. The internal combustion engine 50 is provided with a water temperature sensor 72 for detecting a cooling water temperature THW, and is provided with a crank angle sensor 73 for detecting a crank angle.

The cylinder block 51 is formed with a cylinder 51a. The piston 53 is housed in the cylinder 51a. The cylinder head 52 is secured with the upper surface of the cylinder block 51. The combustion chamber E is formed as a space surrounded by the cylinder block 51, the cylinder head 52, and the cylinder 53. The cylinder head 52 is formed with an intake port 52a for introducing the intake air to the combustion chamber E, and an exhaust port 52b for exhausting the gas from the combustion chamber E. Further, the cylinder head 52 is provided with the intake valve 54 for opening and closing the intake port 52a, and the exhaust valve 55 for opening and closing the exhaust port 52b.

The spark plug 56 is provided in the cylinder head 52 such that an electrode projects from a center of an upper section of the combustion chamber E. The fuel injection valve 57 is provided in the cylinder head 52 such that an injection hole projects to the combustion chamber E. The fuel injection valve 57 is provided between the intake port 52a and the cylinder block 51 in the cylinder head 52. The fuel injection valve 57 injects the fuel directly into the combustion chamber E. The fuel injection valve 57 is not limited to this configuration. For example, the fuel injection valve 57 may be arranged to inject the fuel to the intake port 52a. The fuel injection valve 57 is connected with a fuel supply path FR for supplying the fuel to the internal combustion engine 50.

The cylinder head 52 is provided with the intake-side VVT 58 and the exhaust-side VVT 59. The intake-side VVT 58 is a variable valve mechanism that changes valve characteristics (for example, valve timing, and operation angle) of the intake valve 54. The exhaust-side VVT 59 is a variable valve mechanism that changes valve characteristics of the exhaust valve 55. The VVTs 58 and 59 are provided with state detection sensors 58a and 59a for detecting control states, respectively.

FIG. 2 is a view of a main portion of the fuel supply path FR. The internal combustion engine 50 is equipped with a regulator 60A serving as a pressure adjustment portion capable of adjusting the pressure of the fuel injected to the fuel supply path FR. The regulator 60A is provided with a fuel flow portion 61 and a heating portion 62A. The fuel flow portion 61 is incorporated into the fuel supply path FR and causes the fuel to flow. The heating portion 62A is incorporated into a heat medium circulation path C causing a heat medium to circulate, and heats the fuel flowing in fuel flow portion 61 with the flowing heat medium.

The fuel supply path FR is provided with an inlet-side fuel thermometer 81 and an outlet-side fuel thermometer 82 that detect the temperatures of the fuel at the upstream and downstream of the regulator 60A, respectively. Further, an inlet-side fuel pressure gauge 83 and an outlet-side fuel pressure gauge 84 are provided for detecting the fuel pressure. A fuel flow meter 85 is provided for detecting the flow rate of the fuel at an outlet-side of the regulator 60A.

The multiple gaseous fuels flow in the fuel supply path FR. In this regard, the internal combustion engine 50 uses multiple gaseous fuels as fuel. The multiple gaseous fuels to be used as fuel in the mixed state can flow in the fuel supply path FR. The multiple gaseous fuels are applicable to fuels, kinds of which are clarified but the mixture ratio of which is not clarified. The multiple gaseous fuels specifically includes hydrogen and CNG, and the mixture ratio thereof is not clarified.

The heat medium circulation path C is provided with an inlet-side heat medium thermometer 86 and an outlet-side heat medium thermometer 87 that detect the temperatures of the heat medium at the upstream and downstream of the regulator 60A, respectively. Further, a heat medium flow meter 88 is provided for detecting the flow rate of the heat medium at the outlet side of the regulator 60A. The heat medium circulation path C can cause, for example, water to circulate therein. For example, the heat medium may be cooling water for the internal combustion engine 50.

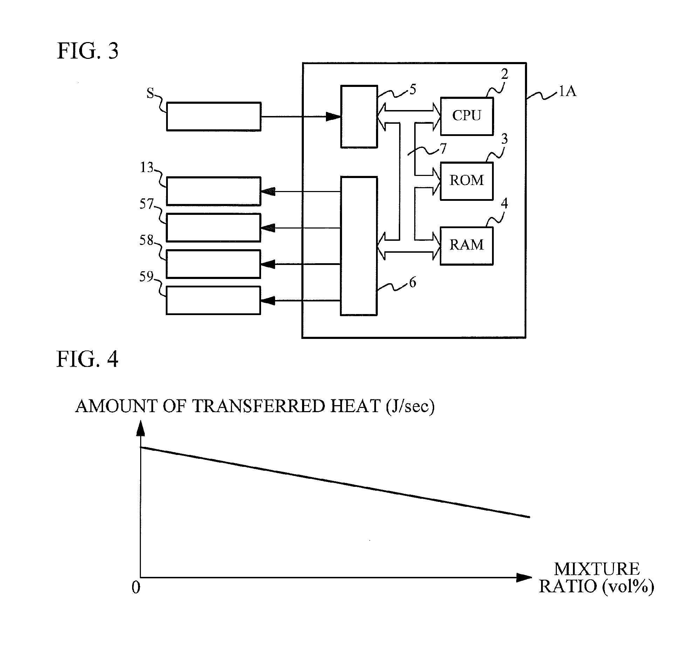

FIG. 3 is a schematic diagram of an ECU 1A. The ECU 1A is an electronic control device serving as a controller device for an internal combustion engine. The ECU 1A is provided with a microcomputer composed of a CPU 2, a ROM 3, and a RAM 4, and input/output circuits 5 and 6. The CPU 2, the ROM 3, the RAM 4, and the input/output circuits 5 and 6 are connected via a bus 7.

The ECU 1A is electrically connected with a sensor group including various sensors and switches. Also, the electronically controlled throttle 13 and the fuel injection valve 57 and the VVTs 58 and 59 are electrically connected as control objects. The sensor group S includes the air flow meter 12, the throttle position sensor 13a, the state detection sensors 58a and 59a, the intake air temperature sensor 71, the water temperature sensor 72, the crank angle sensor 73, the inlet-side fuel thermometer 81, the outlet-side fuel thermometer 82, the inlet-side fuel pressure gauge 83, and the outlet-side fuel pressure gauge 84, the fuel flow meter 85, the inlet-side heat medium thermometer 86, the outlet-side heat medium thermometer 87, and the heat medium flow meter 88.

The ROM 3 is configured to store programs that describe various processes executed by the CPU 2 and map data. The CPU 2 executes the processes on the basis of the programs stored in the ROM 3 while using a temporary memory area formed in the RAM 4 as necessary. Thus, the ECU 1A functionally realizes various function portions such as a control portion, a heat variation amount estimation portion, and a mixture ratio estimation portion, as will be described later.

The control portion performs the combustion control of the internal combustion engine 50 on the basis of the amount of heat variation of the fuel when the regulator 60A adjusts the pressure thereof. The amount of heat variation of the fuel in adjusting the pressure thereof can be grasped based on the amount of the heat transferred from the heating portion 62A to the fuel. This is because the amount of the heat transferred from the heating portion 62A to the fuel changes with the amount of the heat variation of the fuel in adjusting the pressure thereof. The heat variation amount estimation portion is an estimation portion that estimates the amount of heat variation of the fuel in adjusting the pressure thereof. Specifically, the heat variation amount estimation portion estimates the amount of heat transferred from the heating portion 62A to the fuel per unit time on the basis of the specific heat of the heat medium, and the temperatures and the flow rates of the heat medium at the upstream and downstream of the regulator 60A. Thus, the amount of heat variation of the fuel in adjusting the pressure thereof is estimated.

The mixture ratio estimation portion is an estimation portion that estimates the mixture ratio of the fuel to be used. Specifically, the mixture ratio estimation portion estimates the mixture ratio of the fuel to be used, on the basis of the amount of heat variation of the fuel when the pressure thereof is adjusted by the regulator 60A. This is because the amount of heat variation of the fuel in adjusting the pressure thereof changes with the mixture ratio of the fuel to be used. Thus, the mixture ratio of the fuel to be used is estimated by using the above property.

FIG. 4 is a view of the relationship between the amount of transferred heat and the mixture ratio. A vertical axis indicates the amount of heat transferred from the heating portion 62A to the fuel. The perpendicular axis indicates the mixture ratio. The mixture ratio indicates a ratio of hydrogen to CHG. The mixture ratio increases as the ratio of hydrogen in the fuel increases. It is seen in FIG. 4 that the amount of transferred heat tends to decrease as the mixture ratio increases.

The relationship illustrated in FIG. 4 is stored as map data in the ECU 1A beforehand. In this regard, the relationship illustrated in FIG. 4 is established, under the condition that the fuel pressures at the upstream and downstream of the regulator 60A, and the temperature and the flow rate of the fuel at the inlet side of the regulator 60A belong to set and prepared ranges. The ECU 1A stores plural map data which define the relationships between the amount of transferred heat and the mixture ratio, and which correspond to the fuel pressures at the upstream and downstream of the regulator 60A, and the temperature and the flow rate of the fuel at the inlet side of the regulator 60A. The map data may be a single multidimensional map which defines the relationships between the amount of transferred heat and the mixture ratio, and which corresponds to the above ones.

When the mixture ratio of the fuel to be used is estimated based on the amount of heat variation of the fuel in adjusting the pressure thereof, the mixture ratio estimation portion specifically detects the pressures of the fuel at the upstream and downstream of the regulator 60A, and the temperature and the flow rate of the fuel at the inlet side of the regulator 60A. Further, the corresponding map data is selected based on the detected pressures, the detected temperature, and the detected flow rate of the fuel. Furthermore, the mixture ratio corresponding to the amount of heat variation estimated by the heat variation amount estimation portion is read from the selected map data. Thus, the mixture ratio of the fuel to be used is estimated.

In this regard, the combustion control of the internal combustion engine 50 is performed on the basis of the amount of heat variation of the fuel in adjusting the pressure thereof. Specifically, the control portion performs the combustion control of the internal combustion engine 50 on the basis of the mixture ratio, estimated by the mixture ratio estimation portion, of the fuel to be used. For example, the control portion can control the electronically controlled throttle 13, the fuel injection valve 57, and the VVTs 58 and 59, when performing the combustion control of the internal combustion engine 50.

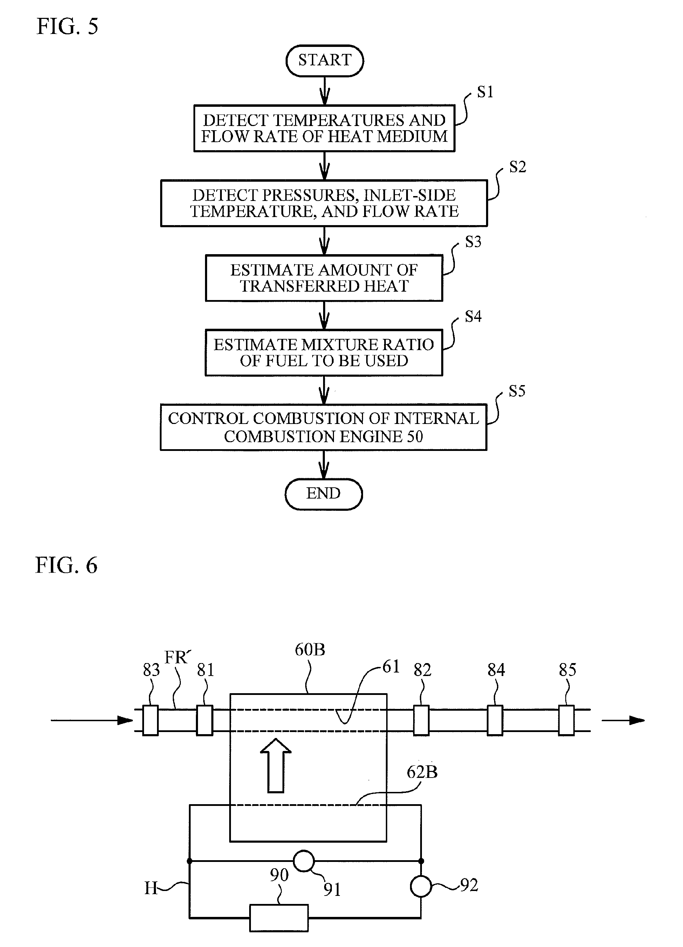

Next, the operation of the ECU 1A that is a first control operation will be described with reference to the flowchart illustrated in FIG. 5. The ECU 1A detects the temperatures and the flow rates of the heat medium at the upstream and downstream of the regulator 60A (step S1). Also, the pressures of the fuel at the upstream and downstream of the regulator 60A, the temperature and the flow rate of the fuel at the inlet side of the regulator 60A are detected (step S2). Sequentially, the ECU 1A estimates the amount of transferred heat based on the detection result obtained in step S1 and the specific heat of the heat medium (step S3). Also, the mixture ratio of the fuel to be used is estimated based on the detection result obtained in step S2 and the amount of transferred heat estimated in step S3 (step S4). Further, the combustion control of the internal combustion engine 50 is performed based on the estimated mixture ratio of the fuel to be used (step S5).

Next, a description will be given of functions and effects of the ECU 1A. The ECU 1A performs the combustion control of the internal combustion engine 50 on the basis of the amount of heat variation of the fuel when the regulator 60A adjusts the pressure thereof. Also, at this time, the mixture ratio of the fuel to be used is estimated on the basis of the amount of heat variation of the fuel when the regulator 60A adjusts the pressure thereof. In this regard, the amount of heat variation of the fuel can be estimated, for example, by providing the heating portion 62A in the regulator 60A.

Therefore, the ECU 1A does not need a detection device such as a gas analyzer device that tends to be expensive due to the special device, as for achieving appropriate combustion corresponding to the mixture ratio of the fuel to be used in the internal combustion engine 50. This facilitates reducing the cost. Also, as for estimating the amount of heat variation of the fuel in adjusting the pressure thereof, the heating portion 62A can be incorporated into the regulator 60A. This facilitates reducing the whole size of the configuration for grasping the mixture ratio of the fuel to be used. Regarding these points, the appropriate combustion corresponds to the mixture ratio of the use fuel can be preferably achieved.

### Embodiment 2

FIG. 6 is a view of a main portion of a fuel supply path FR'. The fuel supply path FR' is substantially the same as the fuel supply path FR, except that a regulator 60B is provided instead of the regulator 60A. The regulator 60B is substantially the same as the regulator 60A except that a heating portion 62B is provided instead of the heating portion 62A. The heating portion 62B is incorporated into a heater circuit H. The heater circuit H is provided with a power-supply unit 90, a voltmeter 91, an ammeter 92, and in addition to the heating portion 62B. The voltmeter 91 detects the voltage applied to the heating portion 62B. The ammeter 92 detects the current flowing through the heating portion 62B. For example, the heating portion 62B is a resistor that heats the fuel flowing in the fuel flow portion 61 by generating electric heat.

As for controlling the combustion of the internal combustion engine 50, in the present embodiment, an ECU 1B is used instead of the ECU 1A. The ECU 1B is substantially the same as the ECU 1A, except that the ECU 1B is electrically connected with the voltmeter 91 and the ammeter 92 instead of the inlet-side heat medium thermometer 86, the outlet-side heat medium thermometer 87, and the heat medium flow meter 88, and except that the heat variation amount estimation portion is achieved as follows. Therefore, the illustration of the ECU 1B is omitted. In the ECU 1B, the heat variation amount estimation portion estimates the amount of heat transferred from the heating portion 62B to the fuel per unit time on the basis of the voltage applied to the heating portion 62B and the current flowing therethrough. Thus, the amount of heat variation of the fuel in adjusting the pressure thereof is estimated.

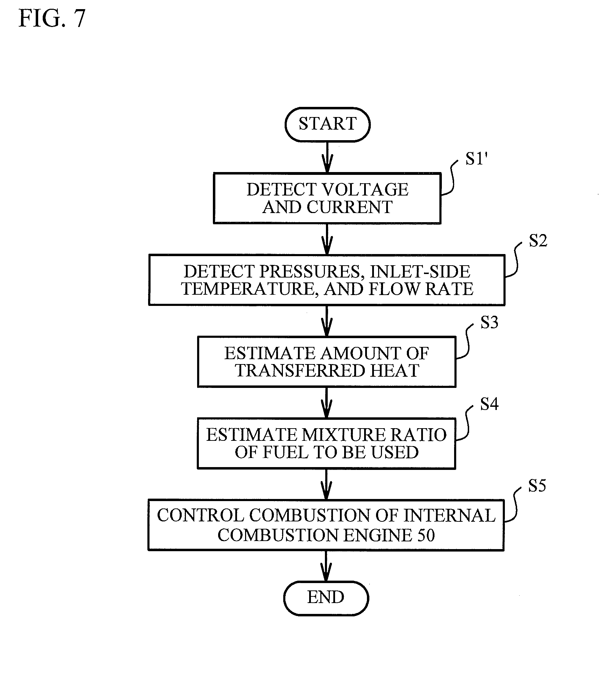

Next, the operation of the ECU 1B that is a second control operation will be described with reference to the flowchart illustrated in FIG. 7. The flowchart illustrated in FIG. 7 is the same as the flowchart illustrated in FIG. 5, except that step S1' is provided instead of step S 1. Thus, these will be specifically described herein. In step S1', the ECU 1B detects the voltage applied to the heating portion 62B and the current flowing therethrough. Additionally, in step S3, the amount of heat variation of the fuel is estimated based on the detection result obtained in step S1'.

Next, a description will be given of functions and effects of the ECU 1B. Herein, in order to estimate the amount of heat variation of the fuel in adjusting the pressure thereof, for example, the heating portion 62B can be used. Like the ECU 1A, the ECU 1B suitable for the heating portion 62B can reduce the cost and reduce the whole size of the configuration. This can preferably achieve the appropriate combustion corresponding to a mixture ratio of the fuel to be used.

The present invention is not limited to the specifically described embodiments, but may include other embodiments and variations without departing from the scope of the claimed invention.

For example, the amount of heat variation of the fuel which has the pressure adjusted by the pressure adjustment portion may be estimated by the heat variation amount estimation portion on the basis of the temperatures of the fuel at the upstream and downstream of the pressure adjustment portion. This case can achieve the appropriate combustion corresponding to a mixture ratio of the fuel to be used, without specifically providing a heating portion in a regulator. It is thus possible to further reduce the cost and reduce the whole size of the configuration.

### DESCRIPTION OF REFERENCE NUMERALS

| | |
|---|---|
| ECU | 1A, 1B |
| internal combustion engine | 50 |
| regulator | 60A, 60B |
| fuel flow portion | 61 |
| heating portion | 62A, 62B |

## Claims

1. A control device for an internal combustion engine which uses multiple gaseous fuels as fuel and which is provided with a pressure adjustment portion capable of adjusting pressure of the fuel to be injected in a fuel supply path, the control device comprising
a control portion that performs combustion control of the international combustion engine, on a basis of an amount of heat variation of the fuel when the pressure of the fuel is adjusted by the pressure adjustment portion.

2. The control device for the internal combustion engine of claim 1, further comprising
an estimate portion that estimates a mixture ratio of the fuel to be used, on a basis of the amount of heat variation of the fuel when the pressure of the fuel is adjusted by the pressure adjustment portion,
wherein the control portion performs the combustion control of the international combustion engine on a basis of the mixture ratio, estimated by the estimate portion, of the fuel to be used, and the combustion control is performed on a basis of the amount of heat variation of the fuel when the pressure of the fuel is adjusted by the pressure adjustment portion.
